Europäisches Patentamt

European Patent Office

Office européen des brevets

(11) Publication number: **0 317 021 B1**

# EUROPEAN PATENT SPECIFICATION

(45) Date of publication of patent specification: **10.06.92**  (51) Int. Cl.⁵: **F16K 47/00**, F16K 15/06

(21) Application number: **88202553.9**

(22) Date of filing: **15.11.88**

(54) **One-way-valve.**

(30) Priority: **18.11.87 NL 8702757**

(43) Date of publication of application:
**24.05.89 Bulletin 89/21**

(45) Publication of the grant of the patent:
**10.06.92 Bulletin 92/24**

(84) Designated Contracting States:
**AT BE CH DE ES FR GB GR IT LI LU NL SE**

(56) References cited:
FR-A- 2 285 560
GB-A- 618 104
US-A- 4 693 270

(73) Proprietor: **WISA B.V.**
**Driepoortenweg 5**
**NL-6827 BP Arnhem(NL)**

(72) Inventor: **Hin, Theodoor Rene Maria**
**Eusebiusbinnensingel 22**
**NL-6811 BX Arnhem(NL)**

(74) Representative: **Hoorweg, Petrus Nicolaas et**
**al**
**OCTROOIBUREAU ARNOLD & SIEDSMA**
**Sweelinckplein 1**
**NL-2517 GK The Hague(NL)**

EP 0 317 021 B1

## Description

The present invention relates to a one-way valve according to the preamble of Claim 1.

Such one-way valves are often used in connection of water users of the water distribution network, wherein such a valve avoids that water from the user flows back towards the network in the case of disappearance of the pressure in the water network. Further such valves find application in water using apparatus, for instance water heaters.

When, in the case of such a known value, the water pressure on the supply side disappears, the valve body will move towards the supply side as caused by the spring present in the valve and the back flowing water until it suddenly hits the valve seat, causing the valve body to be decelerated over a very short path. This causes shock waves at the user's side of the valve, which firstly produce a nuising sound and secondly load the junctions between tube parts and connectors to a high extend, so that the danger exists that as an influence of these shock waves leaks will develop.

US-A-4693270 provides such a one-way valve, wherein the development of such damaging shock waves is avoided.

This known valve comprises a valve seat fixed in a tubular body; a movable valve member; and a chamber, connected with the supply side of the valve through at least one throttle channel, of which chamber the volume is reduced, when the valve travels over at least a part of the path towards the valve seat.

By the application of such a chamber the valve is decelerated so slowly during the hit of the valve seat, that the fluid present in the chamber is pressed out of the chamber by the valve and the valve, as a consequence thereof is decelerated so slowly, that a certain braking path and a certain deceleration time develops, so that the deceleration of the valve reaches considerable lower values than before. as a consequence thereof the amplitude of the shock wave developed to the user side is much smaller than before. Thus the harmful effects thereof are nearly completely eliminated.

However, this known valve comprises a substantial number of different parts. This is understandable as this known valve is meant for connection with a reciprocating compressor.

The present invention aims to Provide such a valve, which is suitable for mass-production and which can thus be made for substantial lower costs, so that it is fit for installation in water supply network systems.

Another aim of the invention is to provide such a one-way valve, which does not incur wear.

Those aims are reached by a one-way valve of the kind referred to above, in which the valve member comprises two parts, a valve body and ringshaped member, separated by the chamber, wherein said chamber is also surrounded by a deformable element provided between said two parts of the valve member.

As a consequence thereof, the valve according to the present invention requires only a limited amount of parts, which can all be easily produced of plastics, so that the costs of such a valve are substantially reduced. Further by the provision of the deformable ring-shaped member the volume of the chamber becomes variable without movement of a part of the valve relative to sealings, as is the case in prior art. Hence wear is avoided.

Subsequently, the present invention will be elucidated with the help of the accompanying drawings, wherein the following is depicted:

fig. 1: a schematic view executed substantially as a cross section of a first embodiment of the valve according to the present invention at the moment that the valve hits the valve seat; and

fig. 2: a schematic view of the valve of fig. 1 during the deceleration of the valve

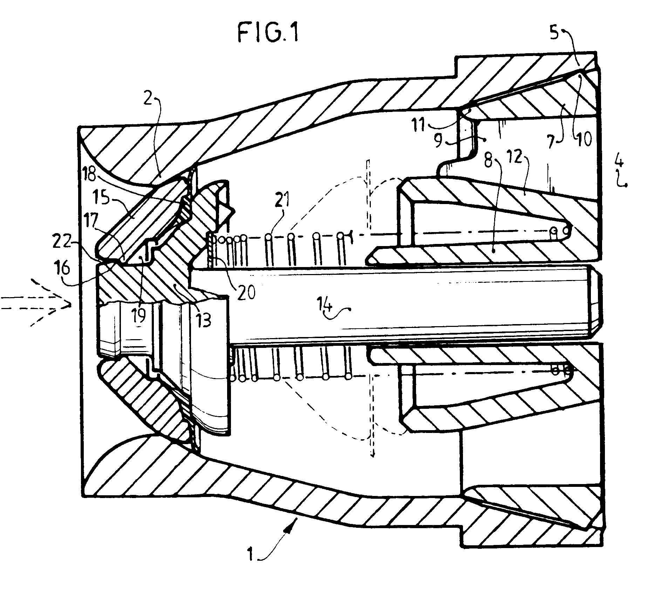

The embodiment of the one-way-valve according to the present invention depicted in fig. 1 comprises a substantially tubular valve housing 1, generally produced of plastic, into which an inner rim 2 has been provided, acting as valve seat. This rim has been provided at the supply side 3 of the valve housing 1, while at the user's side 4 of the house a ring-shaped notch 5 has been provided, into which a guide body 6 has been provided. The guide body 6 comprises a ring 7 and a cilinder 8 mutually connected by three spokes 9. The ring 7 comprises at its outer side a rim 10 fitting into the ring-shaped notch 5 of the valve housing 1, and also a ring-shaped centre plane 11, resting against the inner wall of the valve housing 1, so that the whole guide body 6 can easily be located through the ring-shaped notch 5 and the rim 10 by the snap lock, in which the centre planes 11 provide a good centring of the guide body 6. Around the cilinder 8 a spring housing 12 has been provided.

The movable part of the valve according to the present invention comprises a valve body 13, that is composed of a stem 14 extending through the cilinder 8 and being guided by said cilinder. At the head side of the valve body 13, a ring-shaped member 15 has been provided that is adjacent against the valve seat in the closed condition of the valve. The part of the ring-shaped element 15, that is adjacent to the valve seat 2 is beveled, so that here as well a good centre action is obtained. For localising the ring-shaped element 15 unto the valve body 13, the valve body 13 comprises a rim 16 and the ring-shaped element 15 comprises a rim 17 extending inwardly. These two rims together construct a snap lock so that the ring-shaped element 15 can be fixed easily unto the valve body 13. This rim lock transmits the ring-shaped element 15 with a certain freedom of movement in the axial direction. Between the ring-shaped element 15 and the part of the valve body 13 extending perpendicular to the axial direction, a ring 18 of a resilient materiaal, for instance rubber, is provided and such that a substantial ring-shaped chamber 19 is embraced by the ring-shaped element 15 and the valve body 13. As a consequence of the axial movability of the ring-shaped element 15 relative to the valve body 13, and of the resilience of the ring 18, the volume of the ring-shaped chamber 19 is variable.

By means of a channel, which is also ring-shaped, and which stretches between the rim 17 and the valve body, and between the rim 16 and the ring-shaped element, the chamber 19 is connected with the supply side of the valve.

At the back side of the valve body 13, a ring 20 has been provided, against which a helical spring 21 is provided. This helical spring 21 is at its other side locked between the spring housing 1 and the cilinder 8. The valve body 13 is urged towards the valve seat by means of the pressure of the helical spring 21.

Subsequently the operation of the valve according to the present invention will be described. During normal use water is supplied from the supply side 3, so that the valve body 13, including the ring-shaped element 15, is urged by the water pressure against the pressure of the spring 21 towards the user's side and a ring-shaped slit develops between the ring-shaped element 15 and the valve seat 2 through which the water can flow. Then the water flows through the valve housing 1 between the spokes 9 and it leaves at the user's side.

When through any reason the water pressure at the supply side 3 disappears, the water pressure at the user's side 4 will urge the valve body 13 and also the ring-shaped element 15 towards the valve seat 2 with a considerable force. Further the pressure of the spring 21 enhances this effect. The movement caused thereby will continue until the ring-shaped element 15 has been moved against the valve seat 2. The slit therebetween is then sealed completely so that the full pressure of the water at the user's side 4 is directed towards the valve body 13.

In relation with the freedom of movement between the ring-shaped element 15 and the valve body 13, the possibility exists that the valve body 13 will move further towards the supply side despite the fact that the ring 15 is working. This will involve the reduction of the volume of the chamber 19 through which the liquid being present in the chamber 19 will flow away through the channel 22.

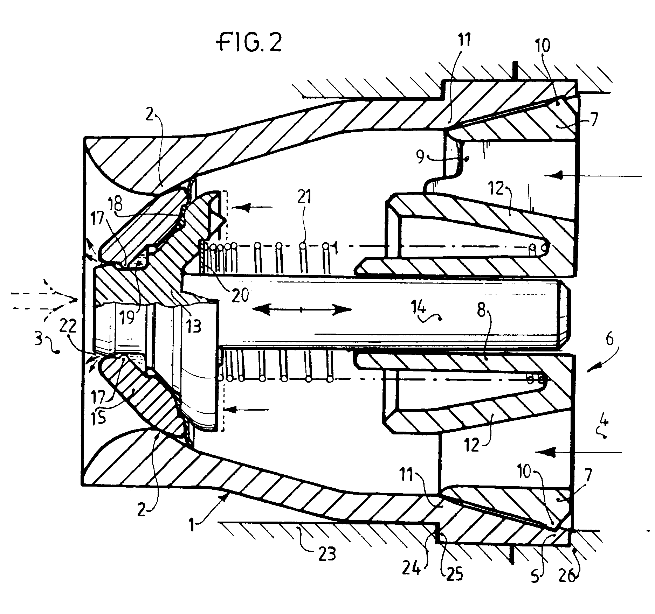

In relation with the narrowness of the channel 22, this outflow will involve some resistance. As a consequence thereof the movement of the valve body 13 is decelerated which process stretches during some period of time. The deceleration of the valve is much smaller than before, so that the pressurethrust is much smaller. Further in fig. 2 it is shown how the valve housing 1 has been locked up in a water tube 23. This comprises a rim 24, through which the rim 25 of the valve housing 21 is being fixated. Further a ring 26 is shown, which locks up the valve housing.

## Claims

1. One-way valve, comprising:
   - a valve seat (2) fixed in a tubular body (1);
   - a movable valve member (13, 15); and
   - a chamber (19) connected with the supply side of the valve through at least one throttle channel (22), of which chamber (19) the volume is reduced, when said movable valve member travels over at least a part of the path towards the valve seat,
   
   **characterized in**
   - that said movable valve member comprises two parts, a valve body (13) and a ringshaped member (15), separated by said chamber (19); and
   - that said chamber (19) is also surrounded by a deformable element (18), which is provided between said two parts (13, 15) of the valve member.

2. One-way valve according to claim 1, **characterized** in that said deformable element (18) also serves as a seal for the movable valve member (13, 15).

3. One-way valve according to claim 1 or 2, **characterized in** that said valve body (13) is connected with guiding means (8, 14) for guiding said valve body (13) in the valve in the axial direction.

4. One-way valve according to claim 3, **characterized in** that said guiding means (8, 14) take the shape of a pin (14) fixed to said valve body (13) and extending through a fixed cilinder (8).

5. One-way valve according to claim 4, **characterized** in that said cilinder (8) has been fixed into said tubular body (1) by means of a snap lock (5, 10).

**6.** One-way valve according to claims 2-5, **characterized in** that both parts (13, 15) of the valve member have been mutually connected through a snap lock (16, 17).

## Revendications

**1.** Clapet antiretour, comprenant:
- un siège (2) de clapet fixé dans un boîtier tubulaire (1);
- un élément mobile (13, 15) de clapet; et
- une chambre (19) reliée au côté alimentation du clapet par l'intermédiaire d'au moins un canal (22) d'étranglement, le volume de la chambre (19) étant réduit lorsque ledit élément mobile du clapet se déplace sur au moins une partie de sa course en direction du siège de clapet, caractérisé
- en ce que ledit élément mobile de clapet comporte deux parties, un corps (13) de clapet et un élément annulaire (15), qui sont séparés l'un de l'autre par ladite chambre (19); et
- en ce que ladite chambre (19) est également entourée par un élément déformable (18), qui est disposé entre lesdites deux parties (13, 15) de l'élément de clapet.

**2.** Clapet antiretour selon la revendication 1, caractérisé en ce que l'élément déformable sert également de joint d'étanchéité pour l'élément mobile (13, 15) du clapet.

**3.** Clapet antiretour selon la revendication 1 ou 2, caractérisé en ce que ledit corps (13) du clapet est relié à des moyens (8, 14) de guidage destinés à guider ledit corps (13) de clapet dans le sens axial.

**4.** Clapet antiretour selon la revendication 3, caractérisé en ce que lesdits moyens (8, 14) de guidage se présentent sous forme d'un axe (14) fixé sur ledit corps (13) de clapet et s'étendant à travers un cylindre fixe (8).

**5.** Clapet antiretour selon la revendication 4, caractérisé en ce que ledit cylindre (8) est fixé dans ledit corps tubulaire (1) au moyen d'un verrouillage (5, 10) à encliquetage.

**6.** Clapet antiretour selon les revendications 2-5, caractérisé en ce que lesdits deux parties (13, 15) du élément mobile de clapet sont reliés au moyen d'un verrouillage (16, 17) à encliquetage.

## Patentansprüche

**1.** Einwegventil mit:
- einem in einem rohrförmigen Körper (1) befestigten Ventilsitz (2);
- einem beweglichen Ventilteil (13, 15); und
- einer mit der Zufuhrseite des Ventils über wenigstens einen Drosselkanal (22) verbundenen Kammer, deren Volumen reduziert ist, wenn sich das bewegliche Ventilteil über wenigstens einen Teil der Weglänge in Richtung des Ventilsitzes bewegt,
dadurch gekennzeichnet,
- daß das bewegliche Ventilteil zwei Teile aufweist, einen Ventilkörper (13) und ein ringförmiges Teil (15), die durch die Kammer (19) voneinander getrennt sind; und
- daß die Kammer (19) zusätzlich von einem deformierbaren Element (18) umgeben ist, das zwischen den zwei Teilen (13, 15) des Ventilteiles vorgesehen ist.

**2.** Einwegventil nach Anspruch 1, dadurch gekennzeichnet, daß das deformierbare Element (18) zusätzlich als Dichtung für das bewegliche Ventilteil (13, 15) dient.

**3.** Einwegventil nach Anspruch 1 oder 2, dadurch gekennzeichnet, daß der Ventilkörper (13) mit Führungseinrichtungen (8,14) zur Führung des Ventilkörpers (13) in axialer Richtung in dem Ventil verbunden ist.

**4.** Einwegventil nach Anspruch 3, dadurch gekennzeichnet, daß die Führungseinrichtungen (8,14) die Form eines Zapfens (14) aufweisen, der an dem Ventilkörper (13) befestigt ist und sich durch einen fixierten Zylinder (8) erstreckt.

**5.** Einwegventil nach Anspruch 4, dadurch gekennzeichnet, daß der Zylinder (8) in dem rohrförmigen Körper (1) mittels Schnappverschluß (5,10) befestigt ist.

**6.** Einwegventil nach einer der Ansprüchen 2-5, **dadurch gekennzeichnet,** daß beide Teile (13, 15) des Ventilelementes mittels eines Schnappverschlußes (16, 17) miteinander verbunden sind.

## FIG.1

FIG.2